Europäisches Patentamt

European Patent Office

Office européen des brevets

(11) Publication number: **0 135 632**
**B1**

# EUROPEAN PATENT SPECIFICATION

(45) Date of publication of patent specification: **04.03.87**

(51) Int. Cl.⁴: **B 23 K 9/30, H 01 R 39/64**

(21) Application number: **83305861.3**

(22) Date of filing: **28.09.83**

(54) **Rotary arc-welding apparatus.**

(43) Date of publication of application:
**03.04.85 Bulletin 85/14**

(45) Publication of the grant of the patent:
**04.03.87 Bulletin 87/10**

(84) Designated Contracting States:
**DE FR GB SE**

(56) References cited:
**US-A-3 609 628**
**US-A-4 336 974**
**US-A-4 401 878**

(73) Proprietor: **NIPPON KOKAN KABUSHIKI KAISHA**
**1-2 Marunouchi 1-chome Chiyoda-ku Tokyo 100 (JP)**

(72) Inventor: **Sugitani, Yuji**
**251-11, Toriicho**
**Tsu City, Mie Pref. (JP)**
Inventor: **Kobayashi, Yukio**
**154, Kanbe**
**Tsu City, Mie Pref. (JP)**

(74) Representative: **Wood, Anthony Charles et al**
**c/o MICHAEL BURNSIDE & PARTNERS 2 Serjeants' Inn Fleet Street**
**London EC4Y 1HL (GB)**

Courier Press, Leamington Spa, England.

# Description

The present invention relates to rotary arc-welding apparatus employing a circular movement of an arc from the tip of a consumable welding electrode directed through a nozzle toward a groove formed between the objects to be welded by rotating the nozzle about the center axis thereof at a high speed.

A method which permits efficient welding of objects such as thick steel plates with uniform penetration of molten metal without causing welding defects is disclosed in Japanese Patent Provisional Publication No. 133,871/80, said method comprising:

directing a nozzle rotatable about the center axis thereof substantially vertically toward an I-shaped narrow groove formed between objects to be welded; directing a consumable welding electrode through said nozzle eccentrically from the center axis of said nozzle toward said groove; feeding a welding current to said consumable welding electrode to produce an arc between said groove and the tip of said consumable welding electrode to weld said objects to each other by means of heat from said arc; rotating said nozzle about the center axis thereof at a high speed; i.e., at least 120 r.p.m., to cause a circular movement of said arc from the tip of said consumable welding electrode corresponding to the eccentricity thereof; and feeding a shielding gas toward said arc and a weld zone to shield said arc and said welding zone from the ambient air.

In the prior art described above, the welding current is fed to the consumable welding electrode by a welding current feeding mechanism provided on the top portion of the nozzle or on a consumable welding electrode feeding mechanism located above the nozzle. However, the welding current feeding mechanism, if provided on the lower end portion of the nozzle, would be required to have a complicated construction because of the high-speed rotation of the nozzle and may be damaged by the arc heat or spatters produced during welding. Furthermore, when the groove width is very small, the welding current feeding mechanism may make it difficult to insert the nozzle into the groove. When the welding current feeding mechanism is provided on the consumable welding electrode feeding mechanism located above the nozzle, on the other hand, the considerable length of the consumable welding electrode between the tip thereof and the consumable welding electrode feeding mechanism leads to a larger electric resistance of the consumable welding electrode, thus resulting in a larger loss of the welding current.

Under such circumstances, there is a demand for the development of a rotary arc-welding apparatus which permits sure feeding of a welding current by a simple welding current feeding mechanism to a nozzle rotating about the center axis thereof at a high speed, without causing damage to the welding current feeding mechanism by the arc heat or spatters produced during welding, and which gives only a small loss of the welding current, and which furthermore, has a welding current feeding mechanism not hindering insertion of the nozzle into the groove even when the groove width is small.

An object of the present invention is to provide rotary arc-welding apparatus which is capable of solving these technical problems.

According to the present invention there is provided a rotary arc-welding apparatus which comprises:

a nozzle rotatable about the center axis thereof at a high speed, said nozzle having in the interior thereof a passage for directing a consumable welding electrode eccentrically from the center axis of said nozzle toward a groove formed between objects to be welded;

a consumable welding electrode feeding mechanism, provided above said nozzle, for continuously directing said consumable welding electrode toward said groove through said nozzle;

a welding current feeding mechanism for feeding a welding current to said nozzle to produce an arc between said groove and the tip of said consumable welding electrode passing through said nozzle;

a nozzle rotating mechanism for rotating said nozzle about the center axis thereof at a high speed to cause a circular movement of said arc from the tip of said consumable welding electrode corresponding to the eccentricity thereof, said nozzle rotating mechanism comprising a motor fixed to a carriage, gears for transmitting the rotation of said motor to said nozzle, and a gear box for housing said gears, said gear box rotatably supporting said nozzle passing therethrough; and

a shielding gas feeding mechanism for feeding a shielding gas toward said arc and a weld zone to shield said arc and said weld zone from the ambient air;

characterized in that:

said welding current feeding mechanism comprises:

a circular current receiving plate, which is fixed to the upper end of said nozzle and rotates together with said nozzle about the center axis thereof, said current receiving plate having at the center thereof a passage for said consumable welding electrode;

a circular brush, having substantially the same diameter as that of said current receiving plate, for feeding said welding current to said current receiving plate, said brush having on the upper surface thereof a current feeding plate, the lower surface of said brush and the upper surface of said current receiving plate having a flat contact interface therebetween, and said brush and said current feeding plate having at the center thereof a passage for said consumable welding electrode;

a plurality of rods for stationarily holding said brush and said current feeding plate so as to prevent same from rotating together with said nozzle and said current receiving plate, the lower portions of said plurality of rods being inserted into said brush and said current feeding plate, and the upper end portions of said plurality of rods being secured to a supporting plate fixed to said carriage;

a plurality of springs for applying pressure onto said contact interface between the lower surface of said brush and the upper surface of said current receiving plate, said plurality of springs being provided between said supporting plate and said current feeding plate; and

said pressure applied by said plurality of springs onto said contact interface between the lower surface of said brush and the upper surface of said current receiving plate being such that, when actuating said nozzle rotating mechanism, said nozzle and said current receiving plate rotate whereas said brush and said current feeding plate do not rotate, and said welding current smoothly flows from said brush to said current receiving plate.

Fig. 1 is a schematic front view illustrating an embodiment of the apparatus of the present invention;

Fig. 2 is an enlarged longitudinal sectional view illustrating an embodiment of the welding current feeding mechanism which is one of the components of the apparatus of the present invention;

Fig. 3(a) is an enlarged longitudinal sectional view illustrating an embodiment of the lower end portion of the nozzle which nozzle is one of the components of the apparatus of the present invention;

Fig. 3(b) is an enlarged longitudinal sectional view illustrating another embodiment of the lower end portion of the nozzle which nozzle is one of the components of the apparatus of the present invention; and

Fig. 3(c) is an enlargitudinal sectional view illustrating further another embodiment of the lower end portion of the nozzle which nozzle is one of the components of the apparatus of the present invention.

From the aforementioned point of view, we carried out extensive studies to develop a rotary arc-welding apparatus which permits sure feeding of a welding current by a simple welding current feeding mechanism to a nozzle rotating about the center axis thereof at a high speed, without causing damage to the welding current feeding mechanism by the arc heat or spatters produced during welding, and gives only a small loss of the welding current, and furthermore, has a welding current feeding mechanism not hindering insertion of the nozzle into the groove even when the groove width is small.

As a result, we found that it is possible to solve the above-mentioned problems by adopting a welding current feeding mechanism for feeding a welding current to a nozzle which comprises: a current receiving plate fixed to the upper end of the nozzle and rotating together with the nozzle, and a brush having on the upper surface thereof a current feeding plate, and stationarily held so as not to rotate together with the nozzle and the current receiving plate, for feeding the welding current to the current receiving plate.

The present invention was made on the basis of the above-mentioned finding, and the rotary arc-welding apparatus of the present invention is described below with reference to the drawings.

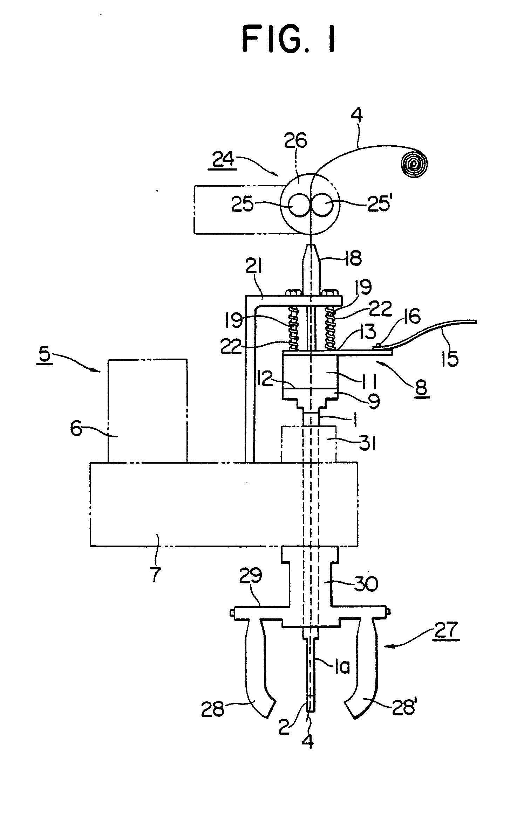

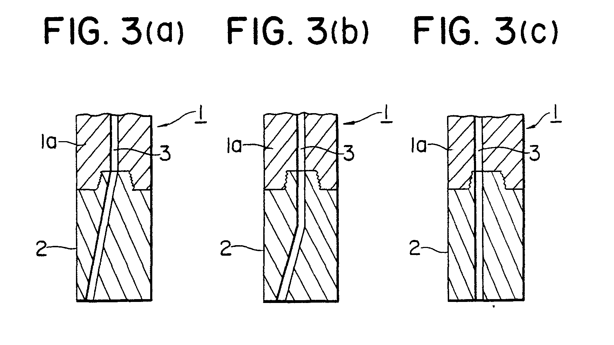

As shown in Fig. 1, a nozzle 1 rotatable about the center axis thereof at a high speed has in the interior thereof a passage 3 for directing a consumable welding electrode 4 eccentrically from the center axis of the nozzle 1 toward a groove formed between objects of welding. The lower end portion 1a of the nozzle 1 has a diameter smaller than that of the other portion thereof, and a tip member 2 is replaceably fitted to the lower end of the nozzle 1. As shown in Figs. 3(a) and 3(b), the passage 3, provided through the nozzle 1 and the tip member 2, for directing the consumable welding electrode 4 may be eccentric from the center axis of the nozzle 1 at the tip member 2, or as shown in Fig. 3(c), may be eccentric from the center axis of the nozzle 1 throughout the entire passage 3 of the nozzle 1 and the tip member 2.

In Fig. 1, a nozzle rotating mechanism 5 comprises a motor 6 fixed to a carriage (not shown), gears (not shown for transmitting the rotation of the motor 6 to the nozzle 1, and a gear box 7 for housing the gears. The gear box 7 supports the nozzle 1 passing through the gear box 7 through an insulator (not shown) rotatably about the center axis of the nozzle 1.

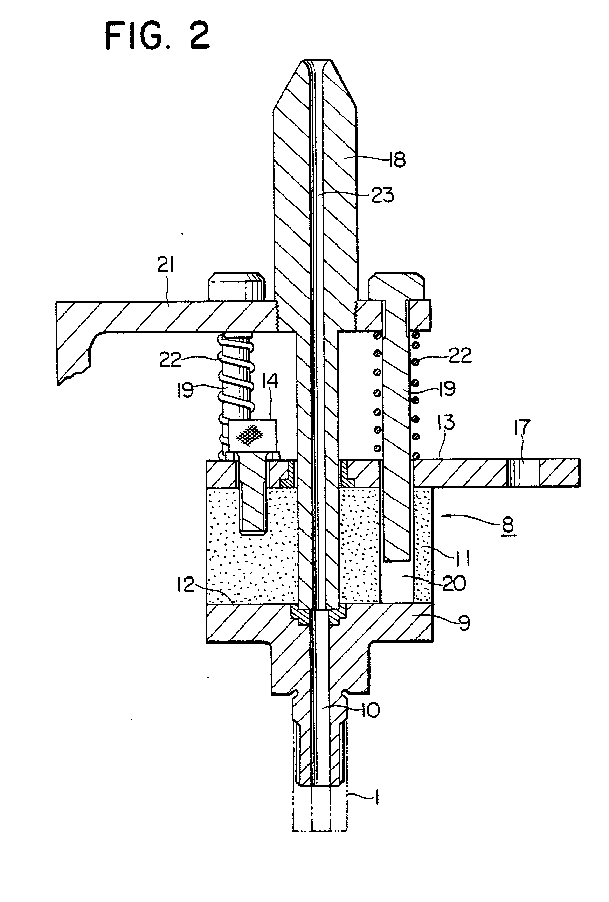

A welding current feeding mechanism 8 is provided at the upper end of the nozzle 1, for feeding a welding current to the nozzle 1 to produce an arc between the tip of the consumable welding electrode 4 passing through the nozzle 1 and the groove formed between the objects of welding. Now, the welding current feeding mechanism 8 is described with reference to Figs. 1 and 2. A circular current receiving plate 9 is secured for example by driving to the upper end of the nozzle 1. The current receiving plate 9 has at the center thereof a passage 10 for the consumable welding electrode 4.

A circular carbonaceous brush 11, which has a diameter substantially equal to that of the current receiving plate 9, for feeding the welding current to the current receiving plate 9, is provided on the upper surface of the current receiving plate 9. The lower surface of the brush 11 and the upper surface of the current receiving plate 9 have a flat contact interface 12 therebetween. A current feeding plate 13 having a diameter substantially equal to that of the brush 11 is secured by means of a plurality of bolts 14 onto the upper surface of the brush 11. The current feeding plate 13 is connected with the end of a cable 15 connected to an electric power source (not shown) with a terminal 16. In Fig. 2, 17 is a terminal fitting bore provided in the current feeding plate 13. A guide pipe 18 described later, which serves as the passage for the consumable welding electrode 4, is provided through the brush 11 and the current feeding plate 13 at their centers.

The lower halves of a plurality of rods 19 for stationarily holding the brush 11 and the current feeding plate 13 are inserted into a plurality of holes 20 provided in the brush 11 and the current feeding plate 13 so as not to rotate together with the nozzle 1 and the current receiving plate 9. The upper end portions of the plurality of rods 19 are secured for example by driving to a supporting plate 21 fixed to the carriage. A plurality of coil-shaped springs 22 for applying a pressure onto the contact interface 12 between the lower surface of the brush 11 and the upper surface of the current receiving plate 9 are provided between the supporting plate 21 and the current feeding plate 13. The plurality of rods 19 are inserted into the plurality of coil-shaped springs 22. The pressure applied by the plurality of springs 22 onto the contact interface 12 between the lower surface of the brush 11 and the upper surface of the current receiving plate 9 is such that, when the nozzle rotating mechanism 5 is actuated, the nozzle 1 and the current receiving plate 9 rotate whereas the brush 11 and the current feeding plate 13 do not rotate, and the welding current smoothly flows from the brush 11 to the current receiving plate 9.

The middle portion of the guide pipe 18 having in the interior thereof a passage 23 for directing the consumable welding electrode 4 toward the nozzle 1 is secured to the supporting plate 21 for example by driving. The lower half of the guide pipe 18 passes through the current feeding plate 13 and the brush 11, and the passage 23 provided in the guide pipe 18 communicates with the passage 10 provided in the current receiving plate 9.

As shown in Fig. 1, a consumable welding electrode feeding mechanism 24 for continuously directing the consumable welding electrode 4 toward the groove formed between the objects of welding is provided above the guide pipe 18. The consumable welding electrode feeding mechanism 24 comprises a pair of rollers 25 and 25' and a motor 26 for rotating the pair of rollers 25 and 25'. The consumable welding electrode 4 is continuously directed toward the above-mentioned groove through the passage 23 in the guide pipe 18, the passage 10 in the current receiving plate 9 and the nozzle 1, by means of the pair of rollers 25 and 25' driven by the motor 26.

A shielding gas feeding mechanism 27 for feeding a shielding gas toward the arc produced between the tip of the consumable welding electrode 4 passing through the nozzle 1 and the above-mentioned groove and a weld zone to shield the arc and the weld zone from the open air is provided on the lower surface of the gear box 7. The shielding gas feeding mechanism 27 comprises a pair of opposing gas nozzles 28 and 28' which eject a shielding gas toward the arc and the weld zone and a substantially horizontal gas nozzle support 29 for securing the pair of gas nozzles at a predetermined position. The nozzle support 29 is fitted to the lower surface of the gear box 7 by means of a fitting piece 30. The nozzle 1 passes, through an insulator (not shown), through the nozzle support 29 and the fitting piece 30 at the center portions thereof. In Fig. 1, 31 is a detector for detecting the deviation of the tip of the consumable welding electrode 4, which projects from the lower end of the nozzle 1 and rotates, from the center line of the groove.

By means of the rotary arc-welding apparatus of the present invention having the construction as described above, welding of the objects of welding is conducted as follows. The nozzle 1 is directed toward the groove formed between the objects of welding, and the consumable welding electrode 4 is directed by the consumable welding electrode feeding mechanism 24, through the nozzle 1, eccentrically from the center axis of the nozzle 1 toward the groove. The nozzle 1 is rotated about the center axis thereof at a high speed by the nozzle rotating mechanism 5, and a welding current is fed to the nozzle 1 by the welding current feeding mechanism 8 provided at the upper end portion of the nozzle 1. As a result, an arc is produced between the tip of the consumable welding electrode 4 directed toward the groove eccentrically from the center axis of the nozzle 1 and the groove, and the arc shows a circular movement corresponding to the eccentricity mentioned above caused by the rotation of the nozzle 1. The shielding gas is fed by the shielding gas feeding mechanism 27 toward the arc and the weld zone to shield the arc and the weld zone from the open air. Thus, the objects of welding is efficiently welded with each other without the occurrence of welding defects caused by the heat of the rotating arc as mentioned above.

In the rotary arc-welding apparatus of the present invention, the welding current feeding mechanism 8 for feeding the welding current to the nozzle 1 comprises, as described above, the current receiving plate 9 fixed to the upper end of the nozzle 1, the brush 11 having on the upper surface thereof the current feeding plate 13, the lower surface of the brush 11 and the upper surface of the current receiving plate 9 having the flat contact interface 12 therebetween, the plurality of rods 19 for stationarily holding the brush 11 and the current feeding plate 13, and the plurality of springs 22 for applying a pressure onto the contact interface 12 between the lower surface of the brush 11 and the upper surface of the current receiving plate 9 in such a manner that the nozzle 1 and the current receiving plate 9 rotate whereas the brush 11 and the current feeding plate 13 do not rotate and the welding current smoothly flows from the brush 11 to the current receiving plate 9.

It is therefore possible to ensure feeding of the welding current to the nozzle 1 rotating at a high speed by a simple construction without disturbing the rotation of the nozzle 1. The welding current feeding mechanism 8, being provided at the upper end of the nozzle 1, is not damaged by the arc heat or spatters produced during welding, and does not hinder, even when welding the objects of welding along a narrow groove, the insertion of the nozzle 1 into the groove. In addition, since the welding current flows through a shorter length of the consumable welding electrode than in the case of the welding current feeding mechanism provided on the consumable welding electrode feeding mechanism 24, the electric resistance of the consumable welding electrode 4 is smaller, thus resulting in a relatively small loss of welding current.

According to the rotary arc welding apparatus of the present invention, as described above in detail, it is possible, when welding objects of welding while causing a circular movement of an arc from the tip of a consumable welding electrode directed through a nozzle toward a groove formed between the objects of welding by rotating the nozzle about the center axis thereof at a high speed, to ensure feeding of a welding current to the nozzle by a simple welding current feeding mechanism without damages to the welding current feeding mechanism by the arc heat or spatters produced during welding, to give only a small loss of the welding current, and furthermore, to prevent the welding current feeding mechanism from hindering the insertion of the nozzle into the groove even when the groove width is small, thus providing industrially useful effects.

**Claim**

A rotary arc-welding apparatus which comprises:

a nozzle (1) rotatable about the center axis thereof at a high speed, said nozzle having in the interior thereof a passage (2) for directing a consumable welding electrode (4) eccentrically from the center axis of said nozzle toward a groove formed between objects to be welded;

a consumable welding electrode feeding mechanism (24), provided above said nozzle, for continuously directing said consumable welding electrode toward said groove through said nozzle;

a welding current feeding mechanism (8) for feeding a welding current to said nozzle to produce an arc between said groove and the tip of said consumable welding electrode passing through said nozzle;

a nozzle rotating mechanism (5) for rotating said nozzle about the center axis thereof at a high speed to cause a circular movement of said arc from the tip of said consumable welding electrode corresponding to the eccentricity thereof, said nozzle rotating mechanism comprising a motor (6) fixed to a carriage, gears for transmitting the rotation of said motor to said nozzle, and a gear box (7) for housing said gears, said gear box rotatably supporting said nozzle passing therethrough; and

a shielding gas feeding mechanism (27) for feeding a shielding gas toward said arc and a weld zone to shield said arc and said weld zone from the ambient air;

characterized in that:

said welding current feeding mechanism (8) comprises:

a circular current receiving plate (9) which is fixed to the upper end of said nozzle (1) and rotates together with the nozzle (1) about the center axis thereof, said current receiving plate (9) having at the center thereof a passage (10) for said consumable welding electrode (4);

a circular brush (11), having substantially the same diameter as that of said current receiving plate (9), for feeding said welding current to said current receiving plate (9), said brush (11) having on the upper surface thereof a current feeding plate (13), the lower surface of said brush (11) and the upper surface of said current receiving plate (9 having a flat contact interface (12) therebetween, and said brush (11) and said current feeding plate (13) having at the center thereof a passage (23) for said consumable welding electrode (4);

a plurality of rods (19) for stationarily holding said brush (11) and said current feeding plate (13) so as to prevent same from rotating together with said nozzle (1) and said current receiving plate (9), the lower portions of said plurality of rods (19) being inserted into said brush (11) and said current feeding plate (13), and the upper end portions of said plurality of rods (19) being secured to a supporting plate (21) fixed to said carriage;

a plurality of springs (22) for applying pressure onto said contact interface (12) between the lower surface of said brush (11) and the upper surface of said current receiving plate (9), said plurality of springs (22) being provided between said supporting plate (21) and said current feeding plate (13); and,

said pressure applied by said plurality of springs (22) onto said contact interface (12) between the lower surface of said brush (11) and the upper surface of said current receiving plate (9) being such that, when actuating said nozzle rotating mechanism (5), said nozzle (1) and said current receiving plate (9) rotate whereas said brush (11) and said current feeding plate (13) do not rotate, and said welding current smoothly flows from said brush (11) to said current receiving plate (9).

**Patentanspruch**

Drehlichtbogenschweißapparat, umfassend einen mit hoher Drehzahl um seine Zentralachse herum drehbaren Elektrodenhalter (1), der in seinem Inneren einen Durchgang (2) zur FÜhrung einer Abbrand-Schweißelektrode (4) exzentrisch zur Zentralachse des Elektrodenhalters zu einer zwischen zu schweißenden Gegenständen geformten Rille aufweist,

einen über dem Elektrodenhalter angeordneten Abbrandschweißelektroden-Vorschubmechanismus (24) zur kontinuierlichen Führung der Abbrandschweißelektrode zur Rille durch den Elektrodenhalter hindurch,

einen Schweißstrom-Zuführmechanismus (8) zum Zuführen eines Schweißstroms zum Elektrodenhalter zwecks Erzeugung eines Lichtbogens zwischen der Rille und der Spitze der den Elektrodenhalter passierenden Abbrandschweißelektrode,

einen Elektrodenhalter-Drehmechanismus (5) zum Drehen des Elektrodenhalters mit hoher Drehzahl um seine Zentralachse zwecks Hervorbringung einer kreisförmigen Bewegung des Lichtbogens an der Spitze der Abbrandschweißelektrode entsprechend ihrer Exzentrizität, wobei der Elektrodenhalter-Drehmechanismus einen an einem Wagen befestigten Motor (6), Zahnräder zur Übertragung der Drehung des Motors auf den Elektrodenhalter und ein die Zahnräder enthaltendes Getriebegehäuse (7), das den es durchsetzenden Elektrodenhalter drehbar lagert, aufweist, und

einen Schutzgas-Zuführmechanismus (27) zum Zuführen eines Schutzgases zum Lichtbogen und zu einer Schweißzone zwecks Abschirmung des Lichtbogens und der Schweißzone gegenüber der Umgebungsluft,

dadurch gekennzeichnet, daß

der Schweißstrom-Zuführmechanismus (8) folgendes aufweist:

eine kreisförmige Stromabnehmerplatte (9), die am oberen Ende des Elektrodenhalters (1) befestigt ist und sich zusammen mit dem Elektrodenhalter (1) um dessen Zentralachse dreht und die in ihrem Zentrum einen Durchgang (10) für die Abbrandschweißelektrode (4) aufweist,

eine im wesentlichen den gleichen Durchmesser wie die Stromabnehmerplatte (9) aufweisende kreisförmige Bürste (11) zum Zuführend des Schweißstroms zur Stromabnehmerplatte (9), wobei die Bürste (11) an ihrer Oberseite eine Stromzuführplatte (13) aufweist, die Unterseite der Bürste (11) und die Oberseite der Stromabnehmerplatte (9) zwischen sich eine flache Kontaktgrenzfläche (12) aufweisen und die Bürste (11) sowie die Stromzuführplatte (13) in ihrem Zentrum mit einem Durchgang (23) für die Abbrandschweißelektrode (4) versehen sind,

mehrere Stangen (19) zur ortsfesten Halterung von Bürste (11) und Stromzuführplatte (13), um diese an einer Mitdrehung mit dem Elektrodenhalter (1) und der Stromabnehmerplatte (9) zu hindern, wobei die unteren Abschnitte der mehreren Stangen (19) in die Bürste (11) und die Stromzuführplatte (13) eingesetzt sind und die oberen Endabschnitte der mehreren Stangen (19) an einer am Wagen angebrachten Tragplatte (21) befestigt sind, (sowie)

mehrere Federn (22) zur Ausübung eines Drucks auf die Kontaktgrenzfläche (12) zwischen der Unterseite der Bürste (11) und der Oberseite der Stromabnehmerplatte (9), wobei die mehreren Federn (22) zwischen der Tragplatte (21) und der Stromzuführplatte (13) angeordnet sind, und

(daß) der durch die mehreren Federn (22) auf die Kontaktgrenzfläche (12) zwischen der Unterseite der Bürste (11) und der Oberseite der Stromabnehmerplatte (9) ausgeübte Druck so gewählt ist, daß sich bei Betätigung des Elektrodenhalter-Drehmechanismus (5) der Elektrodenhalter (1) und die Stromabnehmerplatte (9) drehen, während sich die Bürste (11) und die Stromzuführplatte (13) nicht drehen, und der Schweißstrom gleichmäßig von der Bürste (11) zur Stromabnehmerplatte (9) fließt.

**Revendication**

Appareil rotatif de soudage à l'arc, comprenant:

une buse (1) destinée à tourner autour de son axe central à grande vitesse, la buse ayant, à l'intérieur, un passage (2) destiné à diriger une électrode consommable (4) de soudage excentriquement par rapport à l'axe central de la buse vers une gorge formée entre des objets à souder,

un mécanisme (24) d'avance d'électrode consommable de soudage placé au-dessus de la buse et destinée à diriger de façon continue l'électrode consommable vers la gorge, par l'intermédiaire de la buse,

un mécanisme (8) de transmission d'un courant de soudage à la buse de manière qu'un arc soit formé entre la gorge et l'extrémité de l'électrode consommable passant dans la buse,

un mécanisme (5) d'entraînement en rotation de buse destinée à faire tourner la buse autour de son axe central, à grande vitesse, afin que l'arc subisse un déplacement circulaire à partir de l'extrémité de l'électrode consommable, d'une manière qui correspond à l'excentricité de celle-ci, le mécanisme d'entraînement en rotation de buse comprenant un moteur (6) fixé à un chariot, des pignons destinés à transmettre la rotation du moteur à la buse, et un réducteur (7) destiné à loger les pignons, le réducteur supportant la buse qui passe à l'intérieur de manière qu'elle puisse tourner, et

un mécanisme (27) de transmission d'un gaz protecteur vers l'arc et une zone de soudage afin que l'arc et la zone de soudage soient protégés contre l'air ambiant,

caractérisé en ce que:

le mécanisme (8) de transmission de courant de soudage comporte:

une plaque circulaire (9) de réception de courant fixée à l'extrémité supérieure de la buse (1) et tournant avec la buse (1) autour de l'axe central de celle-ci, la plaque (9) de réception de courant ayant, à son centre, un passage (10) pour l'électrode consommable (4),

un balai circulaire (11) ayant pratiquement le même diamètre que la plaque (9) de réception de courant et destiné à transmettre le courant de soudage à la plaque (9) de réception de courant, le balai (11) ayant, à sa face supérieure, une plaque (13) de transmission de courant, la face inférieure du balai (11) et la face supérieure de la plaque (9) de réception de courant ayant une interface plate de contact entre elles, et le balai (11) et la plaque (13) de transmission de courant ayant, en leur centre, un passage (23) pour l'électrode consommable (4),

plusieurs tiges (19) destinées à maintenir en position fixe le balai (11) et la plaque (13) de transmission de courant de manière qu'ils ne puissent pas tourner avec la buse (1) et la plaque (9) de réception de courant, les parties inférieures des tiges (19) pénétrant dans le balai (11) et la plaque (13) de transmission de courant, les extrémités supérieures des tiges (19) étant fixées à une plaque de support (21) elle-même fixée au chariot,

plusieurs ressorts (22) destinés à appliquer une pression à l'interface (12) de contact formé à la face inférieure du balai (11) et à la face supérieure de la plaque (9) de réception de courant, les ressorts (22) étant placés entre la plaque de support (21) et la plaque (13) de transmission de courant, et

la pression appliquée par les ressorts (22) à l'interface de contact (12) formée entre la face inférieure du balai (11) et la face supérieure de la plaque (9) de réception de courant étant telle que, lors de la maneuvre du mécanisme (5) d'éntraînement en rotation de la buse. la buse, (1) et la plaque (9) de réception de courant tournant alors que le balai (11) et la plaque (13) de transmission de courant ne tournent pas, et le courant de soudage circule réguliérement du balai (11) vers la plaque (9) de réception de courant.

# FIG. I

# FIG. 2

# FIG. 3(a)  FIG. 3(b)  FIG. 3(c)